# EUROPÄISCHE PATENTSCHRIFT

(11) **EP 1 494 338 B1**
(45) Veröffentlichungstag und Bekanntmachung des Hinweises auf die Patenterteilung: **25.04.2018**
(21) Anmeldenummer: 04005091.6
(22) Anmeldetag: 04.03.2004
(51) Int. Cl.: H02K 3/28, H02K 15/02, H02K 15/04, H02K 15/06

(54) **Herstellungsverfahren eines Kerns einer elektrischen Maschine**
Manufacturing method for a core of an electic machine
Procédé de fabrication d'une carcasse pour une machine électique

(30) Priorität: 30.06.2003 DE 10329572
(43) Veröffentlichungstag der Anmeldung: 05.01.2005
(73) Patentinhaber: SEG Automotive Germany GmbH, 70499 Stuttgart (DE)
(72) Erfinder: Scheiffele, Helmut, 71409 Schwaikheim (DE); Stroebel, Wolfgang, 71272 Renningen (DE)
(74) Vertreter: Steinbauer, Florian

(56) Entgegenhaltungen:
- EP-A- 1 174 982
- WO-A-01/54254
- US-A- 4 351 102
- PATENT ABSTRACTS OF JAPAN Bd. 1999, Nr. 09, 30. Juli 1999 (1999-07-30) & JP 11 098786 A (DENSO CORP), 9. April 1999 (1999-04-09)

## Beschreibung

### Stand der Technik

Die Erfindung betrifft ein Verfahren zur Herstellung eines elektromagnetisch erregbaren Kerns einer elektrischen Maschine, insbesondere des Ständers eines Drehstromgenerators nach der Gattung des unabhängigen Patentanspruchs.

Aus der internationalen Veröffentlichung WO 01/54254 A1 ist ein derartiges Verfahren bekannt, wonach in einem Verfahrensschritt ein im wesentlichen Quaderform aufweisender Kern bereitgestellt wird, der auf einer Seite parallel verlaufende Nuten hat, und in die in zumindest einem nachfolgenden Schritt zumindest drei Phasenwicklungen jeweils in bestimmte Nuten des Kerns eingelegt werden. Führt man dabei die drei Phasenwicklungen als sogenannte einfache Schleifenwicklung aus, so ergibt sich nach dem vorgesehenen Rundbiegen des Kerns mit Wicklung an der Fügestelle der beiden Enden des Kerns eine in etwa keilförmige Aussparung des Wickelkopfs beiderseits der Fügestelle. Diese keilförmigen Aussparungen stellen am Umfang des Ständers eine Durchtrittsstelle für Kühlluft dar, die unter Umständen zu unerwünschten Geräuscheffekten führen kann.

Aus der DE 27 50 112 sind verschiedene Wickelschemata für Statorwicklungen von Dreiphasen-Drehstromgeneratoren bekannt. Aus der EP 1174982 A2 ist ein Stator für eine rotierende elektrische Maschine oder einen Linearmotor bekannt. Die JP 11-98786 zeigt Wicklungsanordnungen für verschiedene elektrische Maschinen.

### Vorteile der Erfindung

Das erfindungsgemäße Verfahren zur Herstellung eines elektromagnetisch erregbaren Kerns einer elektrischen Maschine mit einer mehrphasigen einschichtigen Schleifenwicklung mit den Merkmalen des Hauptanspruchs hat den Vorteil, dass durch die vorgesehene Anordnung der Phasenwicklungen die in etwa keilförmige Aussparung zumindest teilweise geschlossen werden kann. Dies hat den Effekt, dass die ständerbedingte Geräuschentwicklung durch die hindurchströmende Kühlluft deutlich verringert wird.

Durch die in den Unteransprüchen aufgeführten Maßnahmen sind vorteilhafte Weiterbildungen des erfindungsgemäßen Verfahrens nach dem Hauptanspruch möglich. Führt man eine der Phasenwicklungen derart aus, dass der Wicklungsüberhang dieser einen Phasenwicklung nur einen Teil der für die dort entsprechende Nut vorgesehenen Spulenseiten umfasst, so lässt sich der Wicklungsüberhang verhältnismäßig einfach beim Rundbiegen des Kerns mit Wicklung in die entsprechende Nut einbringen. Der Fertigungsprozess ist somit einfacher gestaltet, die Gefahr von Fertigungsstörungen und die Gefahr von Defekten in der Wicklung durch den Fertigungsprozess verringert.

Gemäß einer weiteren Ausbildung der Erfindung ist vorgesehen, dass alle Phasenwicklungen gleich gewickelt sind, wobei eine der Phasenwicklungen mit ersten Spulenseiten in eine Nut eingelegt wird, die von der ersten Nut des Kerns um elektrisch 240 Grad beabstandet ist. Es ergibt sich somit ein kompletter Wicklungsüberhang durch eine Phasenwicklung. Dadurch, dass im Gegensatz zur vorherigen Ausbildung der Erfindung alle Phasenwicklungen gleich sind, ist der Herstellungsprozess für die einzelnen Phasenwicklungen auf nur eine Ausführung reduziert, der Herstellungsprozess einfach gehalten und die Kosten dementsprechend gering.

Des weiteren ist nach einer weiteren Ausführung vorgesehen, dass zumindest drei Phasenwicklungen als einschichtige Phasenwicklungen ausgeführt sind. Diese einschichtigen Schleifenwicklungen lassen sich ebenfalls einfach herstellen.

Die beispielsweise drei Phasenwicklungen liegen in drei verschiedenen Ebenen des elektromagnetisch erregbaren Kerns. Zur Herstellungsvereinfachung, d.h. hier zur Vereinfachung des Einbringens des Wicklungsüberhangs, ist vorgesehen, dass die Phasenwicklung mit dem Wicklungsüberhang dem Nutschlitz am nächsten liegt.

Nach einer weiteren Ausbildung ist vorgesehen, dass die Phasenwicklungen aus einem Mehrfachdraht gewickelt werden. Dies bedeutet, dass nicht ein sogenannter einfacher Draht verwendet wird, der jeweils einzeln um eine Wickelschablone herumzuwickeln ist, sondern dass mehrere Drähte verwendet werden, deren Durchmesser im Vergleich mit dem Durchmesser eines Einfachdrahts verringert ist, wodurch die Biegekräfte beim Herstellungsprozess der einzelnen Phasenwicklungen verringert sind und somit die auf die Drähte aufzubringenden Kräfte nicht all zu groß werden. Die Belastungen für die Mehrfachdrähte sind somit geringer, ebenso sinkt dadurch die Gefahr von Herstellungsfehlern beim Herstellen der einzelnen Phasenwicklungen. Nach einer weiteren Ausführung ist vorgesehen, dass alle Phasenwicklungen vor dem Einlegen in den Kern in eine Schablone gepresst werden und dabei die für je eine Nut vorgesehenen Spulenseiten gemeinsam in eine vorgesehene Nutform umgeformt werden. Dies bedeutet, dass nicht jede einzelne Phasenwicklung für sich in den Kern gelegt wird, sondern alle drei Phasenwicklungen zusammen in die Schablone eingelegt werden und nach dem Umformen auch gemeinsam in den elektromagnetisch erregbaren Kern, d.h. in dessen Nuten, eingesetzt werden. Dies vereinfacht wiederum den Herstellungsprozess, da nicht drei Wicklungen nacheinander in den Kern eingesetzt werden müssen, sondern dieser Prozess in einem Schritt vollzogen werden kann.

Nach einer weiteren Ausgestaltung der Erfindung ist vorgesehen, dass die Nutform der Schablone einen Nutschlitz mitumfasst. Dies bedeutet, dass der Gesamtquerschnitt der Spulenseiten in der Schablone nicht nur in die Nutform zwischen Jochrücken und der Unterseite der Zahnköpfe gepresst ist, sondern dass die zu pressenden Drähte so umgeformt werden, dass diese im elektromagnetisch erregbaren Kern sogar den Nutschlitz zumindest teilweise ausfüllen können. Dies hat zur Folge, dass der nach diesem Verfahren hergestellte Ständer eine nochmals gesteigerte Nutfüllung aufweisen kann, da nunmehr auch die Nutschlitze durch Drähte belegt werden können.

Schließlich ist vorgesehen, dass im rundgebogenen Kern mit Wicklung die radial innersten Drähte als Nutverschluss für die radial weiter außen liegenden Drähte wirken.

### Zeichnungen

In den Zeichnungen sind Ausführungsbeispiele mehrerer erfindungsgemäßer Verfahren zur Herstellung eines elektromagnetisch erregbaren Kerns einer elektrischen Maschine mit einer mehrphasigen Wicklung dargestellt. Es zeigen:
- Figur 1: einen Kern mit der prinzipiellen Lage der Spulenseiten der Wicklung in den Nuten des Kerns,
- Figur 2: eine erste Phasenwicklung,
- Figur 3: eine zweite Phasenwicklung,
- Figur 4: eine dritte Phasenwicklung,
- Figur 5: ein erstes Ausführungsbeispiel des Kerns mit einer eingelegten Wicklung in einem ersten Ausführungsbeispiel,
- Figur 6: eine prinzipielle Darstellung, wie ein Wicklungsüberhang in eine Nut eingeschoben wird,
- Figur 7: ein zweites Ausführungsbeispiel der zweiten Phasenwicklung,
- Figur 8: ein zweites Ausführungsbeispiel des Kerns mit eingelegter Wicklung mit der zweiten Phasenwicklung nach deren zweiten Ausführungsbeispiel,
- Figur 9a, Figur 9b und Figur 9c: den Verfahrensschritt, in dem die Spulenseiten in eine Schablone gepresst werden,
- Figur 10: die Anordnung im Wesentlichen rechteckförmiger Profildrähte in einer Nut des Kerns vor dem Rundbiegen,
- Figur 11: eine schematische Darstellung der Verwendung eines profilierten Mehrfachdrahts in einer rechteckförmigen Nut des Kerns vor dem Rundbiegen,
- Figur 12a und Figur 12b: je eine Querschnittsdarstellung durch Spulenseiten mit einer speziell angeprägten innersten Drahtlage,
- Figur 13: ausschnittsweise die Ansicht eines Kerns mit Wicklung im Bereich der Stoßfuge nach dem Stand der Technik.

### Beschreibung

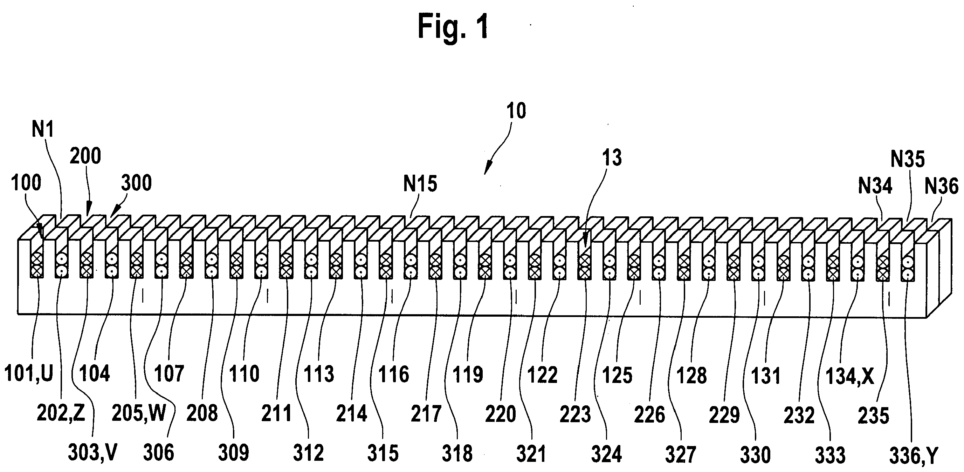

Figur 1 zeigt in schematischer Darstellung einen elektromagnetisch erregbaren Kern 10, der für eine elektrische Maschine vorgesehen ist. Als bevorzugte Ausführungsform der elektrischen Maschine ist ein Drehstromgenerator für Kraftfahrzeuge vorgesehen. In diesem Kern 10 ist eine mehrphasige Wicklung 13 eingesetzt. Diese mehrphasige Wicklung 13 ist in Figur 1 als sogenannte dreiphasige Wicklung 13 ausgeführt.

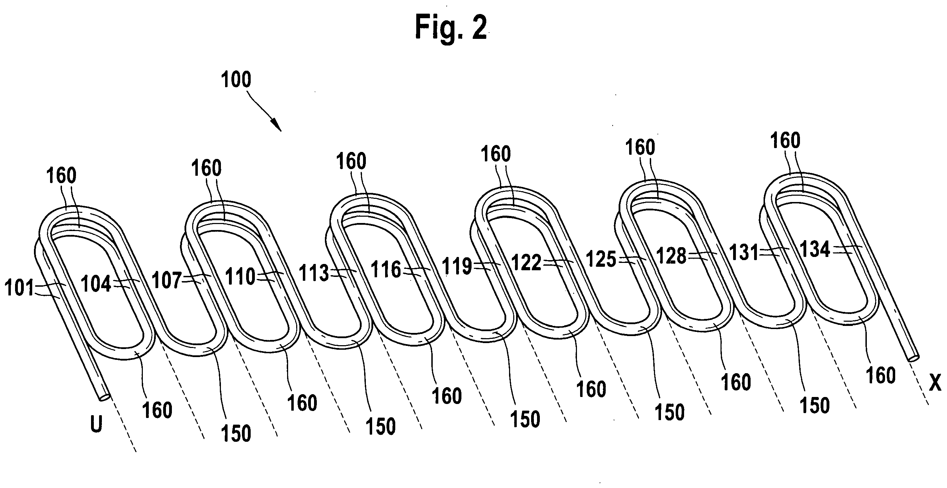

Die erste Phasenwicklung 100 umfasst sowohl die in Figur 1 dargestellten Spulenseiten 101 bis 134, als auch die in Figur 1 nicht dargestellten Spulenverbinder 150 sowie die Spulenseitenverbinder 160, siehe auch Figur 2. Anfang und Ende der ersten Phasenwicklung 100 sind wie üblich mit den Buchstaben U und X bezeichnet.

Des weiteren sind in Figur 1 die zweite Phasenwicklung 200 mit den ebenso symbolhaft dargestellten Spulenseiten 202 bis 235 sowie die dritte Phasenwicklung 300 mit den Spulenseiten 303 bis 336 dargestellt. Die Spulenseiten 101 bis 336 sind in Nuten N1 bis N36 des Kerns 10 eingesetzt. Die Bezeichnung der Nuten nimmt Bezug auf deren Position vom in Figur 1 dargestellten linken Ende des Kerns 10. Darüber hinaus sind die Spulenseiten der entsprechenden Phasenwicklungen mit ihrer ersten Ziffer nach der jeweiligen Phasenwicklung bezeichnet und mit den daran anschließenden zwei Ziffern mit der Position in der entsprechenden Nut. Dies bedeutet für die Bezeichnung der Spulenseiten 101, dass diese der ersten Phasenwicklung zuzuordnen sind und andererseits in diesem Fall in der Nut N1 angeordnet sind.

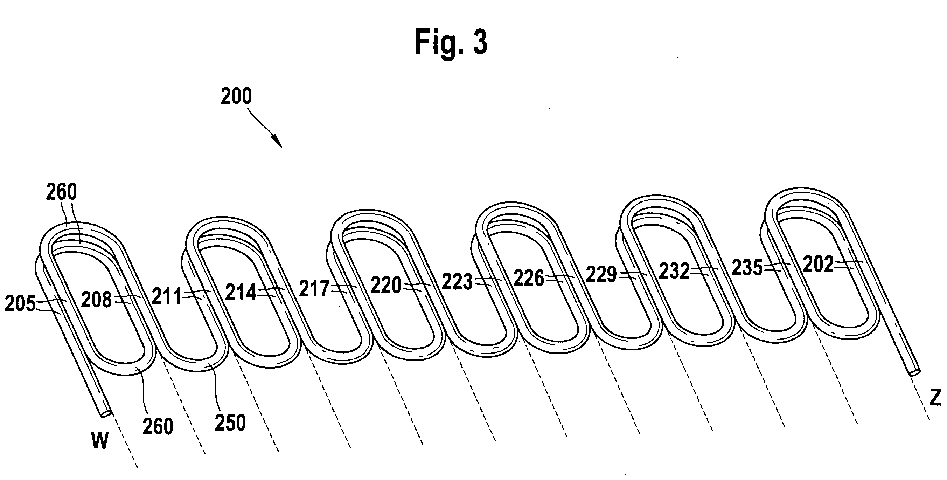

Die Phasenwicklungen 100, 200 und 300 dieses ersten Ausführungsbeispiels sind alle gleich aufgebaut. Dies bedeutet, dass sich an ein Drahtende U, W oder V jeweils eine erste Spulenseite 101, 205 oder 303 anschließt, an die sich jeweils ein Spulenseitenverbinder 160, 260 bzw. 360 anschließt. An die Spulenseitenverbinder 160, 260 oder 360 schließt sich wiederum jeweils eine Spulenseite 104, 208 bzw. 306 an. Je nach dem, wie viele Spulen je Pol gewickelt werden, schließen sich entsprechende Spulenseitenverbinder und Spulenseiten daran an. Ist je Pol einer Phasenwicklung 100, 200 oder 300, die entsprechende Anzahl an Spulen gewickelt, schließt sich daran jeweils ein Spulenverbinder 150, 250 oder 350 an, um über diese wiederum weitere Spulen zu verbinden. Wird, wie im hier ausgeführten Beispiel, eine 12-polige Wicklung 13 ausgeführt, sind insgesamt sechs Spulen je Phasenwicklung 100, 200 oder 300 über Spulenverbinder 150, 250 oder 350 miteinander verbunden. Die Phasenwicklungen 100, 200 bzw. 300 enden letztlich mit einem Drahtende X bzw. Z oder Y. Die entsprechenden Darstellungen der vollständigen Phasenwicklung 100, 200 bzw. 300 sind in den Figuren 2, 3 und 4 abgebildet.

Figur 1 zeigt schematisch die Lage der einzelnen Spulenseiten der einzelnen Phasenwicklungen 100, 200 bzw. 300 in einem rundgebogenen Ständer, wobei hier eine gestreckte Lage der Einfachheit halber gewählt wurde.

Die Kreuze bzw. Punkte in den symbolischen Darstellungen der Spulenseiten geben übrigens die symbolhafte Darstellung der vorgesehenen Stromrichtung im elektromagnetisch erregten Kern 10 bzw. dessen Wicklung 13 an.

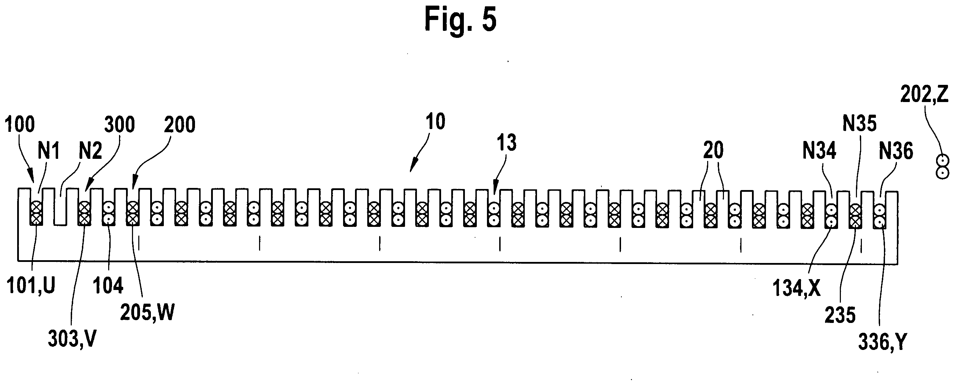

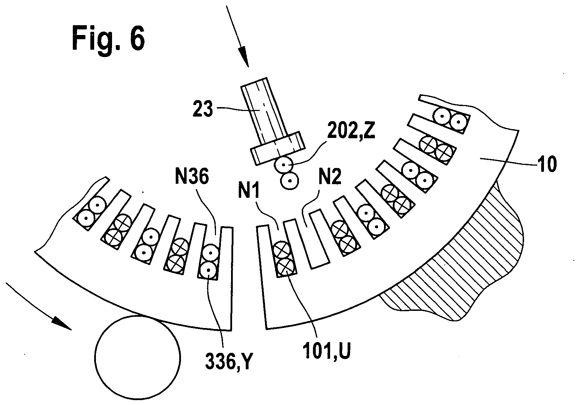

Figur 5 zeigt nun die Anordnungen der Phasenwicklung 100, 200 bzw. 300 im noch flachen Kern 10 vor dem Rundbiegen dieses Kerns 10 mit Wicklung 13. In einem ersten Verfahrensschritt wird der im wesentlichen Quaderform aufweisende Kern 10 bereitgestellt. In zumindest einem nachfolgenden Schritt werden die zumindest drei Phasenwicklungen 100, 200 bzw. 300 in die parallel verlaufenden Nuten N1 und N3 bis N36 eingelegt. Die in Figur 5 gewählten Bezeichnungen stimmen mit den Bezeichnungen der Figur 1 überein. Die Spulenseite 202 bzw. das Drahtende Z der zweiten Phasenwicklung 200 liegt in Figur 5 zunächst nicht in der für diese Spulenseiten 202 bestimmte Nut N2. Vielmehr befindet sich diese Spulenseite 202 mit dem Drahtende Z zunächst außerhalb des Kerns 10, und zwar in einer Ebene, die oberhalb der Zahnköpfe und somit oberhalb der freien Enden der Zähne liegt. Diese Spulenseite 202 wird erst während dem Rundbiegen des Kerns 10 mit Wicklung 13 in die Nut N2 eingeführt, siehe auch Figur 6.

Figur 6 zeigt ausschnittsweise den Verfahrensschritt des Rundbiegens des Kerns 10 mit der Wicklung 13 kurz vor Abschluss des Biegeprozesses. Es ist hier gezeigt, wie ein Stößel 23 die Spulenseiten 202 in die für diese Spulenseiten vorgesehene Nut N2 hineinschiebt. Nachdem der Stößel die Spulenseiten 202 in die Nut N2 hineingeschoben hat, wird der Kern 10 mit Wicklung 13 abschließend rundgebogen, indem dieser sich, wie in Figur 6 dargestellt, gegen den Uhrzeigersinn dreht.

Zu Beginn des Biegevorgangs des Kerns 10 mit Wicklung 13 kann vorgesehen sein, dass in einem ersten Schritt die Nut N1 in die vorgesehene Endform des runden Kerns 10 mit Wicklung 13 vorgebogen wird. Gleiches kann mit der Nut 36 geschehen. Das Einfügen bzw. Einschieben der Spulenseiten 202 in die Nut N2 erfolgt, wenn nur noch die Nut N2 voll geöffnet ist.

Dieses zuvor beschriebene Ausführungsbeispiel beschreibt ein Verfahren zur Herstellung eines elektromagnetisch erregbaren Kerns 10 einer elektrischen Maschine mit einer mehrphasigen Wicklung 13, wobei in einem Verfahrensschritt ein im wesentlichen Quaderform aufweisender Kern 10 bereitgestellt wird, der auf einer Seite parallel verlaufende Nuten hat. In zumindest einem nachfolgenden Schritt werden zumindest drei Phasenwicklungen 100, 200, 300 mit ihren Spulenseiten jeweils in bestimmte Nuten des Kerns 10 eingelegt. Die zumindest drei Phasenwicklungen 100, 200, 300 werden so in die bestimmten Nuten des Kerns 10 eingelegt, dass sich nur ein aus einer oder mehreren Spulenseiten 202 gebildeter Wicklungsüberhang außerhalb des Kerns 10 befindet.

Es ist dabei vorgesehen, dass die zumindest drei Phasenwicklungen 100, 200 und 300 als einschichtige Schleifenwicklungen gewickelt werden.

Die bevorzugte Reihenfolge, mit der die zumindest drei Phasenwicklungen 100, 200 und 300 in den Kern 10 eingelegt werden, ist dabei derart, dass die mit Wicklungsüberhang ausgeführte Phasenwicklung 200 dem Nutschlitz und damit dem freien Ende der Zähne am nächsten liegt. Dies bedeutet, dass zunächst die Phasenwicklung 100 und daran anschließend die Phasenwicklung 300 in den Kern 10 eingelegt werden. Erst daran anschließend werden die Spulenseiten der zweiten Phasenwicklung 200 in die Nuten N5 bis N35 eingelegt. So die Spulenseitenverbinder 260 der letzten Spule beim Wicklungsende Z besonders lang ausgeführt werden, kann die Phasenwicklung 200 auch als erste oder zweite Phasenwicklung in den Kern 10 eingelegt werden. Alternativ kann auch die Reihenfolge zwischen den Phasenwicklungen 100 bzw. 300 vertauscht sein.

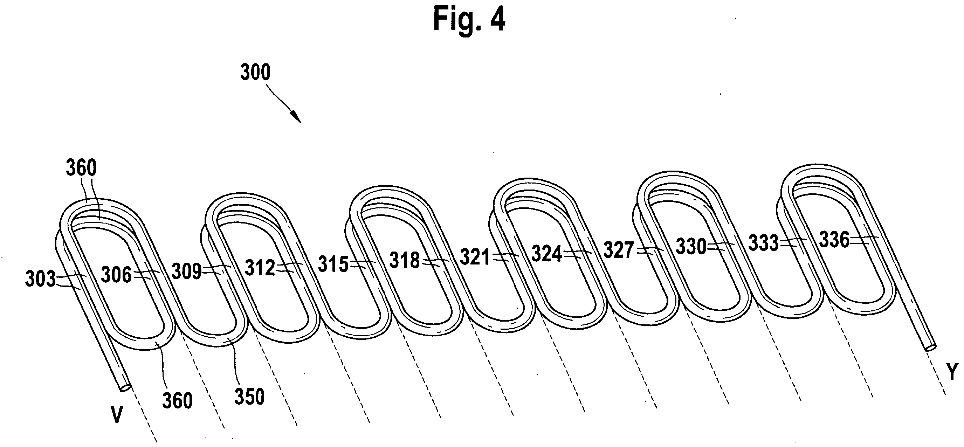

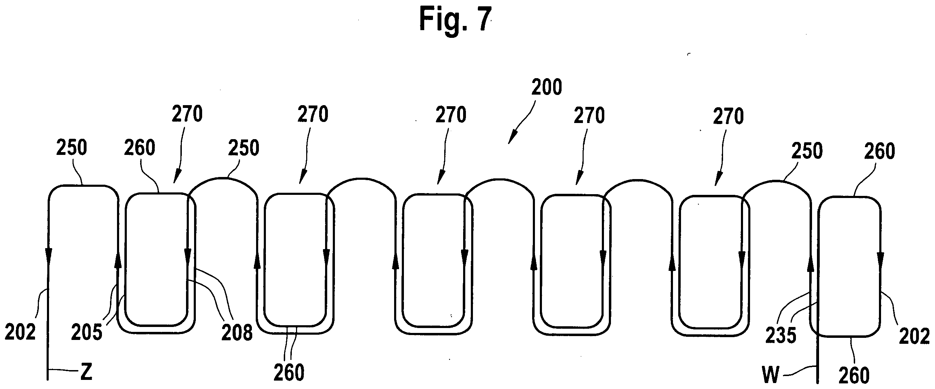

Gemäß einem weiteren Ausführungsbeispiel ist vorgesehen, nur einen Teil einer Spule um einen Pol herum als Wicklungsüberhang auszubilden. Dazu werden zunächst in den Kern 10 sowohl die erste Phasenwicklung 100, als auch die dritte Phasenwicklung 300 in die Nuten N1 bis N36 eingelegt. Die erste Phasenwicklung 100 entspricht ist dabei dem zu Figur 2 beschrieben Ausführungsbeispiel; ebenso gilt dies für die dritte Phasenwicklung 300, die wie zu Figur 4 beschrieben ausgeführt ist. Die zweite Phasenwicklung 200 ist jedoch anders ausgeführt, siehe auch Figur 7.

Die Phasenwicklung 200 beginnt mit einer Spulenseite 202, an die sich ein Spulenverbinder 250 einstückig anschließt. Der Spulenverbinder 250 verbindet diesen ersten Spulenverbinder 202 mit einer nachfolgenden Spule, die aus Spulenseiten 205 und 208 besteht, die mittels zu der nachfolgenden Spule dazugehörigen Spulenseitenverbindern 260 verbunden sind. Nach der vorgesehenen Anzahl an Spulenseiten fährt das Wickelschema mit einem weiteren Spulenverbinder 250 und einer sich daran anschließenden Spule 270 fort. Für ein zwölfpoliges System bedeutet dies bei dieser Phasenwicklung 200, dass sich zunächst insgesamt fünf vollständige Spulen 270 hintereinander befinden, die miteinander durch die Spulenverbinder 250 verbunden sind. An die letzte Spule 270, die für die Nuten N29 und N32 vorgesehen ist, schließt sich daraufhin ein weiterer Spulenverbinder 250 an, an den sich eine erste Spulenseite 235 und daran ein Spulenseitenverbinder 260 anschließt. Diesem Spulenseitenverbinder 260 folgt eine Spulenseite 202, die dazu vorgesehen ist, in eine Nut N2 eingelegt zu werden. An diese Spulenseite 202 schließt sich wiederum ein Spulenseitenverbinder 260 an, dem wiederum eine weitere Spulenseite 235 folgt. Diese Spulenseite 235 endet mit dem Phasenanschluss W. Die Spulenseiten 235 sind dazu vorgesehen, ebenfalls in die Nut N35 eingelegt zu werden.

Die zuerst genannte Spulenseite 202, die mit dem Phasenanschluss Z endet bzw. beginnt, ist ein Teil der Spulenseiten 202 bzw. 235, die eine erste Schleife 270 dieser Phasenwicklung 200 bilden. Die Spulenseite 202, die dem Phasenanschluss Z der Phasenwicklung 200 unmittelbar folgt, bildet ein erstes körperliches Ende der Phasenwicklung 200. Der restliche Teil der Spulenseiten der ersten Schleife dieser Phasenwicklung 200, d.h. die Spulenseiten 202, die mit den Spulenseiten 235 gemeinsam die erste Schleife 270 bilden, bilden ein zweites körperliches Ende dieser Phasenwicklung 200. In gestreckter Lage dieser Phasenwicklung 200 ist das erste körperliche Ende vom zweiten körperlichen Ende dieser Phasenwicklung entgegengesetzt. Das zweite körperliche Ende der Phasenwicklung 200, nämlich die nahe dem Wicklungsende W befindlichen eben erwähnten Spulenseiten 202, bilden folglich den Wicklungsüberhang, der später im Verlauf des Biegeprozesses in die entsprechende Nut N2 einzulegen ist.

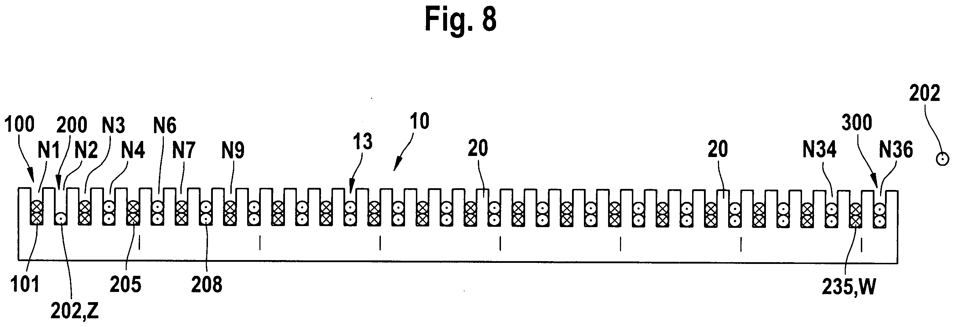

Figur 8 zeigt die Anordnung der drei Phasenwicklungen 100, 200, 300 im Kern 10. Im gezeigten Ausführungsbeispiel wird zunächst die Phasenwicklung 100 in den Kern 10 eingelegt. Es sind dann somit zunächst die Nuten N1, N4, N7 u.s.w. bis N34 belegt. Anschließend wird die Phasenwicklung 300 eingelegt, so dass die Nuten N3, N6, N9 u.s.w. bis N36 belegt sind. Schließlich wird die aus Figur 7 bekannte Phasenwicklung 200 in die Nuten N2, N5 u.s.w. bis N35 durch diese Phasenwicklung 200 belegt. Die Spulenseiten 202, die das zweite körperliche Ende der Phasenwicklung 200 bilden, liegen zunächst außerhalb irgendwelcher Nuten des Kerns 10 und sind oberhalb der Ebene der Nutöffnungen bzw. Zahnköpfe 20 positioniert. Mit den Spulenseiten 101 der Phasenwicklung 100 werden somit erste Spulenseiten 101 einer Phasenwicklung 100 in eine Nut N1 eingelegt und ein Teil der Spulenseiten 202 einer ersten Schleife 270 einer anderen Phasenwicklung 200 in eine andere Nut eingelegt, die von der einen Nut N1 um elektrisch 60 Grad versetzt ist. Dabei bildet dieser Teil der Spulenseiten 202 der ersten Schleife 270 ein erstes körperliches Ende der anderen Phasenwicklung 200, wobei der restliche Teil der Spulenseiten 202 der ersten Schleife 270 der anderen Phasenwicklung 200 in die selbe Nut wie der erste Teil der Spulenseiten 202 der ersten Schleife 270 eingelegt werden und der restliche Teil der Spulenseiten 202 der ersten Schleife 270 ein zweites körperliches Ende der anderen Phasenwicklung 200 bildet. Wird dann der in Figur 8 dargestellte Kern 10 mit der Wicklung 13 analog zur Darstellung in Figur 6 rundgebogen, so braucht der Stößel 23 nur noch den restlichen Teil der Spulenseiten 202 der ersten Schleife 270 der Phasenwicklung 200 in die Nut N2 einzuschieben.

Ganz allgemein kann formuliert werden, dass erste Spulenseiten einer Phasenwicklung in eine Nut eingelegt werden und ein Teil der Spulenseiten einer ersten Schleife einer anderen Phasenwicklung in eine andere Nut eingelegt werden, die von der einen Nut um elektrisch 60 Grad versetzt ist, wobei dieser Teil der Spulenseiten der ersten Schleife ein erstes körperliches Ende der anderen Phasenwicklung bilden und der restliche Teil der Spulenseiten der ersten Schleife der anderen Phasenwicklung in die selbe Nut eingelegt werden und dieser restliche Teil der Spulenseiten der ersten Schleife ein zweites körperliches Ende der anderen Phasenwicklung bildet.

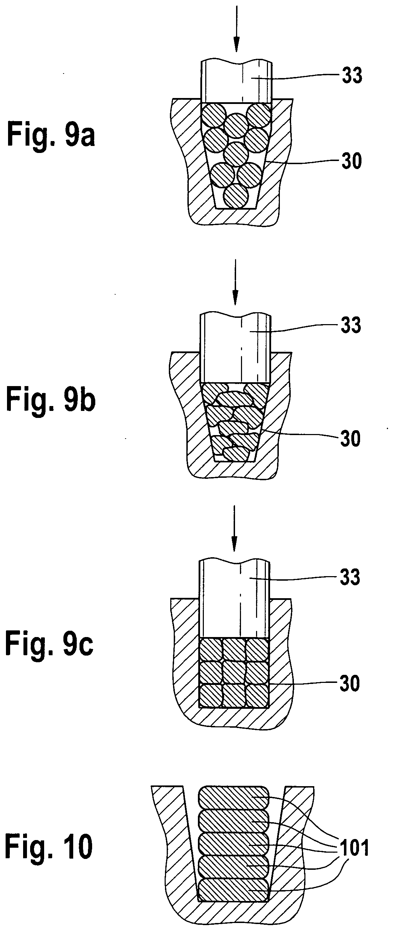

Wie bereits zuvor erwähnt wurde, ist vorgesehen, die Phasenwicklungen 100, 200 und 300 in einem Verfahrensschritt derart anzuordnen, dass diese gemeinsam in den Kern 10 eingelegt werden können. Vorab sollen diese drei Phasenwicklungen in einem Presswerkzeug so umgeformt werden, dass die Spulenseiten der drei Phasenwicklungen so gepresst werden, dass diese an eine Nutform 30 insgesamt angepasst werden, siehe auch Figur 9a und Figur 9b. Die zunächst beispielsweise im Querschnitt runden Spulenseiten werden in die Nutform 30 eingelegt und schließlich durch einen Stößel 33 in die Nutform 30 gepresst. Die so umgeformten Spulenseiten sind dadurch an eine Endform der Nuten im rundgebogenen Kern 10 angepasst. Die Nutform 30 kann sowohl trapezförmig oder beispielsweise rechteckig sein, Figur 9c.

In Figur 10 ist ein weiteres Ausführungsbeispiel dargestellt, wonach ein vorgeformter Draht zur Herstellung der Phasenwicklungen vorgesehen ist. In diesem Ausführungsbeispiel ist es ein Draht mit im wesentlichen rechteckigem Querschnitt.

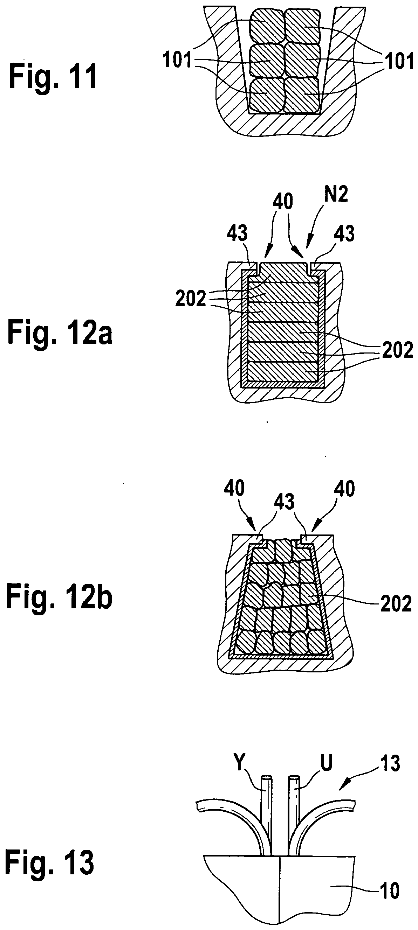

Figur 11 zeigt ein Ausführungsbeispiel, bei dem für die Phasenwicklungen 100, 200 bzw. 300 ein sogenannter Mehrfachdraht verwendet ist. Der Begriff Mehrfachdraht bedeutet hier, dass beispielsweise zwei parallel nebeneinander liegende Drähte gleichzeitig so gewickelt werden, dass sie beispielsweise die erste Phasenwicklung 100 ergeben. In Figur 11 sind die Spulenseiten 101 der ersten Phasenwicklung dargestellt.

Figur 12a zeigt ausschnittsweise die Nut N2 des Kerns 10. Diese Nut N2 ist, wie die anderen Nuten des Kerns 10, in diesem Fall rechteckförmig. Auch in diesem Fall wurden die Spulenseiten 202 vor dem Einlegen in den Kern 10 in einer Schablone vorgeprägt. Dabei wurde in diesem Fall die zuoberst liegende Spulenseite 202 derart angeprägt, dass an deren in Umfangsrichtung des rundgebogenen Kerns 10 liegenden Seiten Kerben angeformt wurden, so dass die Spulenseiten 202 formschlüssig in der Nut N2 gehalten sind. Dazu dienen die bereits erwähnten Kerben 40, die sich nach radial innen gegen sogenannte Zahnkopfleisten 43 abstützen. Diese Anordnung erspart einerseits das Einbringen eines sogenannten Nutverschlusses, der zur Sicherung der in die Nuten eingebrachten Spulenseiten dient. Andererseits ermöglicht dies auch die Nutzung des Zwischenraums zwischen den Zahnkopfleisten 43, so dass der Nutfüllfaktor einer jeden Nut dadurch weiter verbessert werden kann. In Figur 12a ist für den zu wickelnden Draht ein Rechteckdraht verwendet worden.

Figur 12b zeigt die Verwendung eines ehemals im Querschnitt runden Drahts für die Spulenseiten 202. In diesem Fall wurde als Nutform eine Trapezform gewählt. Auch diese Spulenseiten 202 einer Wicklung 200 wurden in ihrer Gesamtheit in einer Schablone derart gepresst, dass die zuoberst liegenden Drahtabschnitte der Wicklung 200 insgesamt zwei Kerben 40 aufweisen, die wiederum zum Abstützen aller Spulenseiten an den Zahnkopfleisten 43 dienen.

Die Nut- bzw. Zahngestaltung im Kern 10 kann derart sein, dass einerseits die Nut trapezförmig und der Zahn parallel ist. Eine derartige Ausführung eignet sich besonders für Runddrähte. Für Profildrähte, insbesondere Rechteckdrähte, ist besonders die Kombination aus einem trapezförmigen Zahn mit einer parallelflankigen Nut geeignet.

Bei Verwendung von rechteckigen Profildrähten ist außerdem bei entsprechender Ausführung der Nutisolation ein Verzicht auf den Nutverschluss möglich. Der an der Nutöffnung liegende letzte Profildraht stützt sich an der Nutisolation ab, die am Zahnrücken entsprechend verlängert wurde, so dass diese bis unter die Zahnkopfleisten 43 reichen.

Eine besonders gute Kühlung des Wickelkopfes, gebildet aus den Spulenseitenverbindern, ergibt sich dann, wenn die Spulenseitenverbinder gefächert werden, so dass diese nicht direkt aufeinander liegen und somit die Kühlluft dazwischen treten kann. Nach dem Wickeln der einzelnen Phasenwicklungen 100, 200 bzw. 300 ist vorgesehen, die Drahtenden U, V, W bzw. X, Y, Z abzuisolieren und nach einer vorgesehenen Länge zu kürzen.

In Figur 13 ist ausschnittsweise die Fuge des rundgebogenen Kerns 10 mit Wicklung 13 dargestellt, wie sie sich ergibt, wenn der aus dem Stand der Technik bekannte Kern 10 mit Wicklung 13 rundgebogen ist. Dabei entsteht die eingangs erwähnte charakteristische keilförmige Aussparung zwischen den Enden der Wicklung 13. Diese keilförmige Öffnung ist gemäß der hier beschriebenen erfindungsgemäßen Wicklungsanordnung nunmehr durch weitere Spulenseitenverbinder der Phasenwicklung 200 zumindest teilweise geschlossen, so dass die Geräuschentwicklung verringert ist.

Die in den Ausführungsbeispielen beschriebene Anordnung des Kerns 10 mit Wicklung 13 ist nicht auf Ausführungen mit 36 Nuten im Kern 10 beschränkt. Die hier beschriebene Anordnung der Wicklung 13 für den Kern 10 ist nach Verlängerung des Kerns 10 um weitere 12 Nuten beispielsweise auch auf einen Kern 10 mit insgesamt 48 Nuten N1 bis N48 anwendbar (16-poliger Ständer). In analoger Weise werden dann die in Figur 2, Figur 3, Figur 4 und Figur 7 dargestellten Wicklungen um zwei weitere Spulen jeweils verlängert, die selbstverständlich durch die entsprechenden Spulenverbinder verbunden sind.

## Patentansprüche

1. Verfahren zur Herstellung eines elektromagnetisch erregbaren Kerns (10) einer elektrischen Maschine mit einer mehrphasigen Wicklung (13), wobei in einem Verfahrensschritt ein im Wesentlichen Quaderform aufweisender Kern (10) bereitgestellt wird, der auf einer Seite parallel verlaufende Nuten (N1 bis N36; N1 bis N48) hat, wobei in zumindest einem nachfolgenden Schritt zumindest drei Phasenwicklungen (100, 200, 300) jeweils in bestimmte Nuten des Kerns (10) eingelegt werden, wobei jede Phasenwicklung (100, 200, 300) Spulenseiten umfasst, die dazu bestimmt sind in Nuten eingelegt zu werden und die durch Spulenseitenverbinder verbunden sind, und der Kern (13) rundgebogen wird, nachdem die Phasenwicklungen (100, 200, 300) in die Nuten eingelegt worden sind, **dadurch gekennzeichnet, dass** die zumindest drei Phasenwicklungen (100, 200, 300) so in die bestimmten Nuten des Kerns (10) eingelegt werden, dass sich nur ein aus einer oder mehreren Spulenseiten (202) gebildeter Wicklungsüberhang außerhalb des Kerns (10) befindet, wobei die Spulenseiten dazu vorgesehen sind, in eine Nut eingelegt zu werden, und die eine oder mehreren Spulenseiten (202) des einen Wicklungsüberhangs beim Rundbiegen des Kerns (10) mit der Wicklung (13) in die entsprechende Nut eingebracht werden.

2. Verfahren nach Anspruch 1, **dadurch gekennzeichnet, dass** erste Spulenseiten einer ersten Schleife einer Phasenwicklung in eine Nut eingelegt werden und ein Teil der Spulenseiten einer ersten Schleife einer anderen Phasenwicklung in eine andere Nut eingelegt werden, die von der einen Nut um elektrisch 60 Grad versetzt ist, wobei dieser Teil der Spulenseiten der ersten Schleife ein erstes körperliches Ende der anderen Phasenwicklung in den Nuten bildet, wobei der restliche Teil der Spulenseiten der ersten Schleife der anderen Phasenwicklung in die selbe Nut eingelegt wird und dieser restliche Teil der Spulenseiten der ersten Schleife ein zweites körperliches Ende der anderen Phasenwicklung in den Nuten bildet.

3. Verfahren nach Anspruch 1, **dadurch gekennzeichnet, dass** alle Phasenwicklungen (100, 200, 300) gleich gewickelt sind, wobei eine der Phasenwicklungen mit ersten Spulenseiten in eine Nut eingelegt wird, die von der ersten Nut um elektrisch 240 Grad beabstandet ist.

4. Verfahren nach einem der Ansprüche 1 bis 3, **dadurch gekennzeichnet, dass** die zumindest drei Phasenwicklungen (100, 200, 300) als einschichtige Schleifenwicklungen gewickelt werden.

5. Verfahren nach einem der vorhergehenden Ansprüche, **dadurch gekennzeichnet, dass** die mit Wicklungsüberhang ausgeführte Phasenwicklung dem Nutschlitz am nächsten liegt.

6. Verfahren nach einem der vorhergehenden Ansprüche, **dadurch gekennzeichnet, dass** die Phasenwicklungen (100, 200, 300) aus einem Mehrfachdraht gewickelt werden.

7. Verfahren nach einem der vorhergehenden Ansprüche, **dadurch gekennzeichnet, dass** alle Phasenwicklungen (100, 200, 300) vor dem Einlegen in den Kern (10) in eine Schablone gepresst werden und dabei die für je eine Nut vorgesehenen Spulenseiten gemeinsam in eine vorgesehene Nutform umgeformt werden.

8. Verfahren nach Anspruch 7, **dadurch gekennzeichnet, dass** die Nutform einen Nutschlitz zwischen Zahnkopfleisten (43) mit umfasst.

9. Verfahren nach Anspruch 7 oder Anspruch 8, **dadurch gekennzeichnet, dass** der Kern (10) mit Wicklung (13) rundgebogen wird und dadurch radial innerst liegende Drähte als Nutverschluss für die radial weiter außen liegenden Drähte wirken.

## Claims

1. A method of producing an electromagnetically excitable core (10) of an electric machine having a multi-phase winding (13), where in one method step a core (10) is provided which has a substantially cuboidal shape and has grooves (N1 to N36; N1 to N48) which extend in parallel on one side, wherein in at least one subsequent step at least three phase windings (100, 200, 300) are each inserted into specific grooves of the core (10), wherein each phase winding (100, 200, 300) comprises coil sides which are intended to be inserted into grooves and are connected by means of coil side connectors, and the core (13) is bent round after the phase windings (100, 200, 300) have been inserted into the grooves, **characterised in that** the at least three phase windings (100, 200, 300) are inserted into the specific grooves of the core (10) in such a manner that only one winding overhang which is formed from one or more coil sides (202) is located outside the core (10), wherein the coil sides are provided to be inserted into a groove, and the one or more coil sides (202) of the one winding overhang are introduced with the winding (13) into the corresponding groove as the core (10) is being bent round.

2. The method as claimed in claim 1, **characterised in that** first coil sides of a first loop of a phase winding are inserted into one groove and a part of the coils sides of a first loop of another phase winding are inserted into another groove which is offset electrically by 60 degrees from the one groove, wherein this part of the coil sides of the first loop forms a first physical end of the other phase winding in the grooves, wherein the remaining part of the coil sides of the first loop of the other phase winding is inserted into the same groove and this remaining part of the coil sides of the first loop forms a second physical end of the other phase winding in the grooves.

3. The method as claimed in claim 1, **characterised in that** all of the phase windings (100, 200, 300) are wound identically, wherein one of the phase windings is inserted with first coil sides into a groove which is spaced apart electrically by 240 degrees from the first groove.

4. The method as claimed in any one of claims 1 to 3, **characterised in that** the at least three phase windings (100, 200, 300) are wound as single-layer lap windings.

5. The method as claimed in any one of the preceding claims, **characterised in that** the phase winding designed have a winding overhang is closest to the groove slot.

6. The method as claimed in any one of the preceding claims, **characterised in that** the phase windings (100, 200, 300) are wound from a multiple wire.

7. The method as claimed in any one of the preceding claims, **characterised in that** all of the phase windings (100, 200, 300) are pressed into a template before being inserted into the core (10) and the coil sides provided for a respective groove are jointly formed into a provided groove shape.

8. The method as claimed in claim 7, **characterised in that** the groove shape also comprises a groove slot between tooth point strips (43).

9. The method as claimed in claim 7 or claim 8, **characterised in that** the core (10) having the winding (10) is bent round and radially innermost wires thereby act as a groove closure for the wires lying radially further out.

## Revendications

1. Procédé pour fabriquer un noyau électromagnétiquement excitable (10) d'une machine électrique ayant un enroulement multiphasé (13), dans lequel un noyau ayant pratiquement une forme de parallélépipède (10), pourvu de rainures (N1 à N36 ; N1 à N48) s'étendant parallèlement d'un côté, est fourni lors d'une première étape de procédé, dans lequel au moins trois enroulements de phase (100, 200, 300) sont respectivement placés dans des rainures déterminées du noyau (10) lors d'au moins une étape suivante, dans lequel chaque enroulement de phase (100, 200, 300) comporte des côtés de bobine destinés à être placés dans des rainures et reliés par des parties de liaison de côtés de bobine, et le noyau (13) est cintré après que les enroulements de phase (100, 200, 300) ait été placés dans les rainures, **caractérisé en ce que** les au moins trois enroulements de phase (100, 200, 300) sont placés dans les rainures déterminées du noyau (10) de telle sorte qu'une partie d'enroulement en porte-à-faux formée à partir d'un ou plusieurs côtés de bobine (202) se situe à l'extérieur du noyau, dans lequel les côtés de bobine sont destinés à être placés dans une rainure et le ou les côtés de bobine (202) de la partie d'enroulement en porte-à-faux sont insérés dans la rainure correspondante lors du cintrage du noyau (10) avec l'enroulement (13).

2. Procédé selon la revendication 1, **caractérisé en ce que** des premiers côtés de bobine d'une première boucle d'un enroulement de phase sont placés dans une première rainure et une partie des côtés de bobine d'une première boucle d'un autre enroulement de phase est placée dans une autre rainure qui est électriquement décalée de 60 degrés par rapport à ladite première rainure, dans lequel cette partie des côtés de bobine de la première boucle forme une première extrémité physique de l'autre enroulement de phase dans les rainures, dans lequel la partie restante des côtés de bobine de la première boucle de l'autre enroulement de phase est placée dans la même rainure et cette partie restante des côtés de bobine de la première boucle forme une seconde extrémité physique de l'autre enroulement de phase dans les rainures.

3. Procédé selon la revendication 1, **caractérisé en ce que** tous les enroulements de phase (100, 200, 300) sont enroulés à l'identique, dans lequel l'un des enroulements de phase ayant des premiers côtés de bobine est placé dans une rainure qui est électriquement espacée de 240 degrés par rapport à la première rainure.

4. Procédé selon l'une des revendications 1 à 3, **caractérisé en ce que** les au moins trois enroulements de phase (100, 200, 300) sont enroulés comme des enroulements de boucle à une seule couche.

5. Procédé selon l'une des revendications précédentes, **caractérisé en ce que** l'enroulement de phase réalisé avec la partie d'enroulement en porte-à-faux se situe le plus près de l'encoche de rainure.

6. Procédé selon l'une des revendications précédentes, **caractérisé en ce que** les enroulements de phase (100, 200, 300) sont enroulés à partir de plusieurs fils.

7. Procédé selon l'une des revendications précédentes, **caractérisé en ce que** tous les enroulements de phase (100, 200, 300) sont pressés dans un gabarit avant le placement dans le noyau (10) et les côtés de bobine prévus pour chaque rainure sont conformés ensemble suivant une forme de rainure prévue.

8. Procédé selon la revendication 7, **caractérisé en ce que** la forme de rainure comporte une encoche de rainure entre des moulures de tête de dent (43).

9. Procédé selon la revendication 7 ou la revendication 8, **caractérisé en ce que** le noyau (10) est cintré avec l'enroulement (13) et des fils situés radialement les plus à l'intérieur agissent ainsi comme des moyens de fermeture de rainure pour les fils situés radialement plus à l'extérieur.
